# EUROPÄISCHE PATENTANMELDUNG

(11) **EP 2 083 499 A1**
(43) Veröffentlichungstag der Anmeldung: **29.07.2009**
(21) Anmeldenummer: 08020229.4
(22) Anmeldetag: 20.11.2008
(51) Int. Cl.: H02J 13/00, G05B 15/02, H04L 29/08

(54) **Steuersystem**

(30) Priorität: 26.01.2008 DE 102008006142
(71) Anmelder: Insta Elektro GmbH, 58511 Lüdenscheid (DE)
(72) Erfinder: Mundinger, Harald, Dipl.-Ing., 58849 Herscheid (DE); Groll, Roland, Dipl.-Ing., 58515 Lüdenscheid (DE)

(57) **Zusammenfassung**

Es wird ein Steuersystem zur Beeinflussung von in Gebäuden installierten elektrischen/elektronischen Geräten und Anlagen vorgeschlagen. Zu dem Zweck ein Steuersystem für die Gebäudesystemtechnik zu schaffen, bei welchem auch die vom Benutzer gesprochenen Informationen als Sprachbefehle erkannt werden und durch welche dann die zur bedarfsgerechten Beeinflussung weiterer Systemteilnehmer notwendigen Informationen erzeugt werden, sind mehrere Geräte als Kommunikationsgeräte ausgeführt, die jeweils mit zumindest einem Mikrophon und zumindest einem Lautsprecher ausgerüstet sind, wobei die Kommunikationsgeräte über das Bussystem und einen deren Energieversorgung sicherstellenden Power-Over-Ethernet-Switch mit einer, die Informationen der Kommunikationsgeräte verarbeitenden und mit der Steuerzentrale in Verbindung stehenden zentralen Ablaufsteuerung verbunden sind.

## Beschreibung

Die vorliegende Erfindung geht von einem gemäß Oberbegriff des Hauptanspruches konzipierten Steuersystem für die Gebäudesystemtechnik aus.

Derartige Steuersysteme sind in der Regel dafür vorgesehen, eine Vielzahl von in Gebäuden installierte Systemteilnehmer z. B. Geräte, Anlagen, Antriebe, Fühler, Wächter, Schalter, Dimmer bzw. Alarmanlagen, Radioanlagen usw. bedarfsgerecht zu beeinflussen. Oftmals sind die Geräte, Anlagen usw. über ein Bussystem datentechnisch miteinander vernetzt, so dass eine bedarfsgerechte Beeinflussung auch über eine Steuerzentrale vorgenommen werden kann.

Durch die DE 102 04 809 A1 ist ein dem Oberbegriff des Hauptanspruches entsprechendes Steuersystem für die Gebäudesystemtechnik bekannt geworden. Dieses Steuersystem ist zur Beeinflussung mehrerer an ein Bussystem angeschlossener Systemteilnehmer vorgesehen, wobei zur zentralen Beeinflussung eine Steuerzentrale vorgesehen ist. Bei diesem Steuersystem können die zur bedarfsgerechten Beeinflussung der Systemteilnehmer notwendigen Informationen jedoch nur in Form manueller Betätigungen, wie z. B. durch Drücken, Drehen, Tasten, Schieben usw. eine Betätigungsgliedes durch den Benutzer erzeugt werden. Eine Erzeugung der zur bedarfsgerechten Beeinflussung notwendigen Informationen durch akustisch erzeugte Informationen, wie z. B. Sprachbefehle durch den Benutzer ist jedoch nicht vorgesehen.

Ausgehend von einem derart ausgebildeten Steuersystem liegt der vorliegenden Erfindung die Aufgabe zugrunde, ein Steuersystem für die Gebäudesystemtechnik zu schaffen, bei welchem auch die vom Benutzer gesprochenen Informationen als Sprachbefehle erkannt werden, durch welche die zur bedarfsgerechten Beeinflussung der Systemteilnehmer notwendigen Informationen erzeugt werden.

Erfindungsgemäß wird diese Aufgabe durch die im Hauptanspruch angegebenen Merkmale gelöst.

Bei einer solchen Ausbildung ist besonders vorteilhaft, dass der Benutzer auf besonders bequeme Art und Weise, nämlich lediglich durch sprachliche Befehle eine bedarfsgerechte Beeinflussung der Systemteilnehmer vornehmen kann. Weiterhin ist besonders vorteilhaft, dass die Kommunikationsgeräte eines solchen Steuersystems multifunktional verwendet werden können. So können diese Kommunikationsgeräte ohne weiteres z. B. zur Steuerung bzw. bedarfsgerechten Beeinflussung ganz verschiedener Geräte, Anlagen usw. eines Gebäudes genutzt werden. Außerdem lassen sich diese Kommunikationsgeräte auch ohne weiteres als Bestandteil in eine Alarmanlage, eine Rundrufanlage, eine Diktiergeräteanlage usw. integrieren ohne dass zusätzliche Geräteinstallationen notwendig sind.

Weitere vorteilhafte Ausgestaltungen des erfindungsgemäßen Gegenstandes sind in den Unteransprüchen angegeben. Anhand zweier Ausführungsbeispiele sei die Erfindung im Prinzip näher erläutert, dabei zeigt:
- Fig. 1:: eine Prinzipskizze eines solchen Steuersystem;

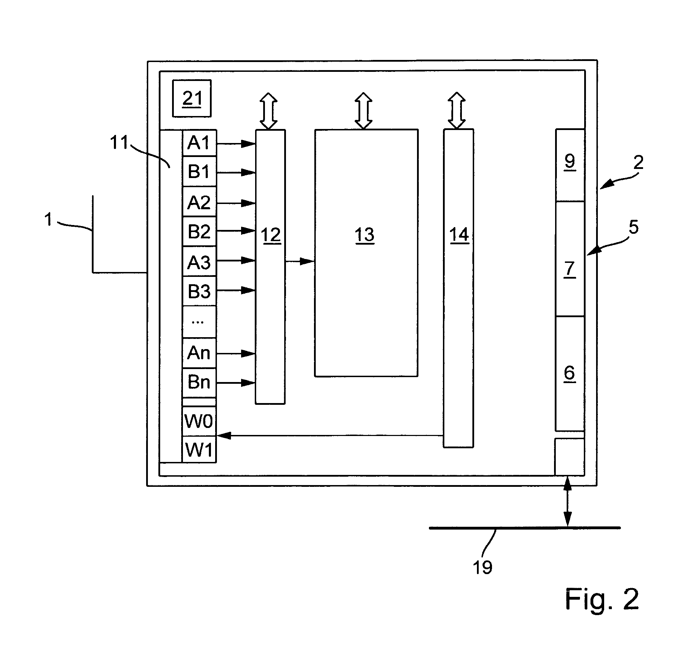

- Fig. 2:: prinziphaft die Steuerzentrale eines solchen Steuersystems als Blockschaltbild.

Wie aus den Figuren hervorgeht, besteht ein solches Steuersystem im Wesentlichen aus mehreren Geräten, Anlagen usw. welche über ein Bussystem 1 mit einer Steuerzentrale 2 in Verbindung stehen. Das Bussystem 1 ist als sogenanntes Ethernet ausgeführt. Mehrere Geräte eines solchen Steuersystems sind als sogenannte Kommunikationsgeräte 3 ausgeführt, welche jeweils mit zumindest einem Mikrophon und zumindest einem Lautsprecher ausgerüstet sind. Die Kommunikationsgeräte 3 stehen über das Bussystem 1 und einen, deren Energieversorgung sicherstellenden Power-Over-Ethernet-Switch 4 mit einer die Informationen der Kommunikationsgeräte 3 verarbeitenden und mit der Steuerzentrale 2 in Verbindung stehenden zentralen Ablaufsteuerung 5 in Verbindung. Im vorliegenden Fall ist die zentrale Ablaufsteuerung 5 in eine als Rechner ausgeführte Steuerzentrale 2 integriert. Der Rechner ist als sogenannte wartungsfreie Embedded-Rechnereinheit ausgeführt.

Wie des weiteren aus den Figuren hervorgeht, ist die zentrale Ablaufsteuerung 5 zur eindeutigen Identifikation der Kommunikationsgeräte 3 mit einer Identifikationseinrichtung 6 ausgerüstet. Die Identifikationseinrichtung 6 weist zur eindeutigen Identifikation der Kommunikationsgeräte 3 eine Laufzeiterfassungseinrichtung 7 auf, welche Laufzeitunterschiede feststellt, die entstehen, wenn von den Kommunikationsgeräten 3 Informationen ausgesendet werden. Die Laufzeitunterschiede werden durch eine Laufzeitverzögerungseinrichtung 8 erzeugt, welche in die Kommunikationsgeräte 3 integriert ist und in Abhängigkeit des Zahlenwertes, welcher die eindeutige Adresse des jeweiligen Kommunikationsgerätes 3 bestimmt, eine Laufzeitverzögerung der gesendeten Informationen des jeweils betreffenden Kommunikationsgerätes 3 hervorruft. Zur Synchronisierung der von den Kommunikationsgeräten 3 ausgehenden Informationen ist in der zentralen Ablaufsteuerung 5 eine Synchronisationseinrichtung 9 vorhanden, diese ermöglicht es asynchron übertragene Datenpakete wieder synchron einzusortieren. Die Energieversorgung der Kommunikationsgeräte 3 erfolgt über den Power-Over-Ethernet-Switch 4, welcher an ein Netzteil 10 angeschlossen ist. Zudem ist in die zentrale Ablaufsteuerung 5 ein Port-Multiplexer/Demultiplexer 11 integriert, damit eine eindeutige Zuordnung der Audiosignale von und zu den Kommunikationsgeräten 3 erfolgen kann.

Des weiteren ist in die zentrale Ablaufsteuerung 5 eine Sprachvorbearbeitungsstufe 12 integriert, damit immer das beste Sprachsignal an die Spracherkennungsstufe 13 weitergeleitet wird. Auch ist der zentralen Ablaufsteuerung 5 eine Spracherkennungsstufe 13 zugeordnet, damit Sprachkommandos eindeutig erkannt werden. Letztendlich verfügt die zentrale Ablaufsteuerung 5 über eine Sprachsynthesestufe 14 aufweist, damit Sprachkommandos in textueller Form bzw. Textform in das Steuersystem eingelernt werden können. Zum Anschluss an das Bussystem 1 ist die Steuerzentrale 2 mit einem ersten Ethernetanschluss 15 ausgerüstet. Die Kommunikationsgeräte 3 sind zum Anschluss an das Bussystem 1 mit einem zweiten Ethernetanschluss 16 versehen.

Zumindest durch einen Teil der von den Kommunikationsgeräten 3 ausgehenden bzw. gesendeten Informationen ist eine sprachgeführte Steuerung weiterer an das Bussystem 1 angeschlossener Geräte und Anlagen möglich. Hierzu werden vom Benutzer Kommandos in Form von Sprachbefehlen in die Kommunikationsgeräte 3 eingegeben.

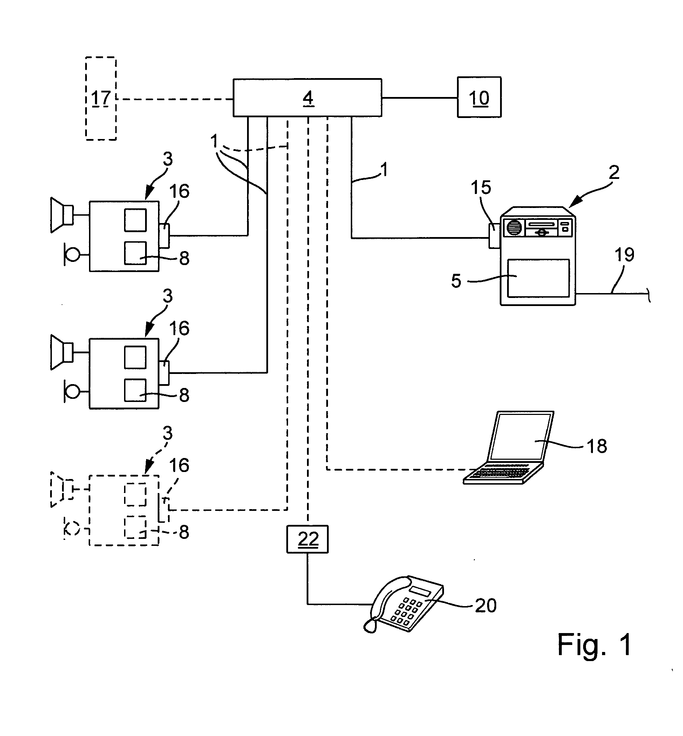

Wie insbesondere aus Figur 1 hervorgeht, kann ein Teil der Kommunikationsgeräte 3 Bestandteil einer an das Bussystem 1 angeschlossenen Alarmanlage 17 sein. Dabei werden in einer Nicht-Alarmsituation Audiosignale von den Kommunikationsgeräten 3 über eine längere Zeit hinweg aufgenommen und von dem Steuersystem analisiert, sowie als eingelernte Muster gespeichert. Sobald die Raumüberwachung der Alarmanlage 17 eingeschaltet wird, vergleicht das Steuersystem über die Kommunikationsgeräte 3 dann die eingehenden Audiosignale mit den eingelernten Mustern. Falls es zu signifikanten Abweichungen kommt oder aber zuvor definierte Alarmsignale, wie Glasbruch erkannt werden, wird eine Meldung an die übergeordnete Alarmanlage 17 abgesetzt.

Selbstverständlich können die Kommunikationsgeräte 3 in ähnlicher Art und Weise Bestandteil einer an das Bussystem 1 angeschlossenen Rundrufanlage, Diktiergeräteanlage, Telefonanlage, Radioanlage, Babyphonanlage usw. sein.

Damit eine einfache und komfortable Inbetriebnahme eines solchen Steuersystems möglich ist, kann an den Power-Over-Ethernet-Switch ein Inbetriebnahmegerät 18 angeschlossen werden. Im vorliegenden Fall ist das Inbetriebnahmegerät als Laptop ausgeführt. Im Inbetriebnahmegerät 18 werden zunächst mögliche Sprachbefehle in Textform definiert bzw. eingegeben und durch die Sprachsynthesestufe 14 in natürliche Sprache umgesetzt. Diese Sprachbefehle dienen dazu, die Kommandos in die Spracherkennungsstufe 13 einzulernen. Weiterhin werden durch das Inbetriebnahmegerät 18 den zuvor definierten Kommandos Aktionen auf dem weiteren Bussystem 19 zugeordnet.

Wie des weiteren, insbesondere aus Figur 1 hervorgeht, steht die Steuerzentrale 2 mit dem weiteren Bussystem 19 in Verbindung. Im vorliegenden Fall ist das weitere Bussystem 19 als sogenanntes KNX-EIB-Bussystem ausgeführt. Über dieses weitere Bussystem 19 können wie üblich unterschiedliche elektrische/elektronische Aktoren beeinflusst werden.

Ist, wie in Figur 1 dargestellt, eine Telefonanlage 20 angeschlossen, ist das Steuersystem derart ausgeführt, dass nicht nur von den Kommunikationsgeräten 3 ausgehenden Informationen akzeptiert werden, sondern dass auch Signale akzeptiert werden, die über die Telefonanlage 20 an das Steuersystem abgegeben werden. Hierdurch ist es möglich, dass weitere an das Bussystem 19 angeschlossene Aktoren aus der Ferne unter Nutzung der weltweiten Telekommunikationssysteme beeinflusst werden, ohne dass am fernen Ort außer einem Telefon eine besondere technische Einrichtung oder gar ein Internetzugang erforderlich ist. Um das Steuersystem, welches sprecherunabhängig arbeitet gegen unberechtigte Zugriffe zu schützen, werden gebräuchliche Verfahren zur Authentizierung eingesetzt, wobei zu diesem Zweck eine Authentizierungsstufe 21 in die zentrale Ablaufsteuerung 5 der Steuerzentrale 2 integriert ist. Gebräuchliche Verfahren können z. B. ein Codewort darstellen, welches durch eine gesprochene Zahlenfolge abgebildet wird. Darüber hinaus kann das Steuersystem Challenge-Response-Verfahren anwenden, bei dem der Sprecher vom System aufgefordert wird, eine Frage zu beantworten, die nur dem Sprecher bekannt ist. Zum Anschluss der Telefonanlage 20 an das Steuersystem ist ein Umsetzer 22 vorgesehen, welcher die Telefonsignale in Ethernet-Signale umsetzt.

Die Qualität der Spracherkennung kann erheblich verbessert werden, wenn man Kenntnisse über die akustischen Eigenschaften des Raums hat, in welchem sich die Kommunikationsgeräte 3 befinden. Insbesondere ist hierbei wichtig, die räumlichen Veränderungen zu kennen, die sich durch den Aufenthalt von Personen bzw. durch das Aufstellen von Möbelstücken ergeben. Mit Hilfe der Lautsprecher der Kommunikationsgeräte 3 ist es möglich, akustische Testsignale zu erzeugen, welche von den Mikrophonen der Kommunikationsgeräte 3 wieder aufgenommen werden. Durch entsprechende Signalverarbeitungsverfahren ist es dann möglich, zumindest näherungsweise das akustische Modell des betreffenden Raums zu errechnen und damit die akustischen Signale einer gezielten Vorverarbeitung durch die Sprachvorbearbeitungsstufe 12 zu unterwerfen, bevor sie der Spracherkennungsstufe 13 zugeführt werden, womit die Erkennungssicherheit erhöht wird.

### Bezugszeichenliste

- 1.: Bussystem
- 2.: Steuerzentrale
- 3.: Kommunikationsgerät
- 4.: Power-Over-Ethernet-Switch
- 5.: zentrale Ablaufsteuerung
- 6.: Identifikationseinrichtung
- 7.: Laufzeiterfassungseinrichtung
- 8.: Laufzeitverzögerungseinrichtung
- 9.: Synchronisationseinrichtung
- 10.: Netzteil
- 11.: Port-Multiplexer/Demultiplexer
- 12.: Sprachvorbearbeitungsstufe
- 13.: Spracherkennungsstufe
- 14.: Sprachsynthesestufe
- 15.: erster Ethernetanschluss
- 16.: zweiter Ethernetanschluss
- 17.: Alarmanlage
- 18.: Inbetriebnahmegerät
- 19.: weiteres Bussystem
- 20.: Telefonanlage
- 21.: Authentizieru ngsstufe
- 22.: Umsetzer

## Patentansprüche

1. Steuersystem zur Beeinflussung von in Gebäuden installierten elektrischen/elektronischen Geräten und Anlagen, wobei die Geräte und Anlagen an eine Energieversorgung angeschlossen sind und über ein Bussystem mit einer Steuerzentrale in Verbindung stehen, **dadurch gekennzeichnet, dass** mehrere Geräte als Kommunikationsgeräte (3) ausgeführt sind, die jeweils mit zumindest einem Mikrophon und zumindest einem Lautsprecher ausgerüstet sind, und dass die Kommunikationsgeräte (3) über das Bussystem (1) und einen deren Energieversorgung sicherstellenden Power-Over-Ethernet-Switch (4) mit einer, die Informationen der Kommunikationsgeräte (3) verarbeitenden und mit der Steuerzentrale (2) in Verbindung stehenden zentralen Ablaufsteuerung (5) verbunden sind.

2. Steuersystem nach Anspruch 1, **dadurch gekennzeichnet, dass** die zentrale Ablaufsteuerung (5) in eine als Rechner ausgebildete Steuerzentrale (2) integriert ist.

3. Steuersystem nach Anspruch 1 oder 2, **dadurch gekennzeichnet, dass** die Steuerzentrale (2) und/oder die zentrale Ablaufsteuerung (5) zur eindeutigen Identifikation der Kommunikationsgeräte (3) mit einer Identifikationseinrichtung (6) ausgerüstet ist.

4. Steuersystem nach einem der Ansprüche 1 bis 3, **dadurch gekennzeichnet, dass** die Identifikationseinrichtung (6) zur eindeutigen Identifikation der Kommunikationsgeräte (3) eine Laufzeiterfassungseinrichtung (7) aufweist, welche bei den von den Kommunikationsgeräten (3) ausgehenden Informationen auftretende Laufzeitunterschiede feststellt.

5. Steuersystem nach einem der Ansprüche 1 bis 4, **dadurch gekennzeichnet, dass** jedes Kommunikationsgerät (3) mit einer eindeutigen Adresse versehen sind, und dass jeweils eine Laufzeitverzögerungseinrichtung (8) aufweist, welche in Abhängigkeit des, die Adresse bestimmenden Zahlenwertes eine bestimmte Laufzeitverzögerung für die ausgehenden Informationen des betreffenden Kommunikationsgerätes (3) herbeiführt.

6. Steuersystem nach einem der Ansprüche 1 bis 4, **dadurch gekennzeichnet, dass** zur eindeutigen Identifikation der Kommunikationsgeräte (3) diese von der Identifikationseinrichtung (6) angeregt werden, Informationen in Form bestimmter akustischer Signale abzugeben, und dass die Identifikationseinrichtung (6) mit einer Akustikerfassungseinrichtung ausgerüstet ist, welche Laufzeitverzögerungen der bestimmten akustischen Signale feststellt, die sich durch die räumlich unterschiedliche Anordnung der Kommunikationsgeräte (3) ergeben.

7. Steuersystem nach einem der Ansprüche 1 bis 6, **dadurch gekennzeichnet, dass** zur Synchronisierung der von den Kommunikationsgeräten (3) ausgehenden Informationen in der Steuerzentrale (2) und/oder in der zentralen Ablaufsteuerung (5) eine Synchronisationseinrichtung (9) vorgesehen ist.

8. Steuersystem nach einem der Ansprüche 1 bis 7, **dadurch gekennzeichnet, dass** die Energieversorgung der Kommunikationsgeräte über ein an den Power-Over-Ethernet-Switch (4) angeschlossenes Netzteil (10) erfolgt.

9. Steuersystem nach einem der Ansprüche 1 bis 8, **dadurch gekennzeichnet, dass** die Steuerzentrale (2) und/oder die zentrale Ablaufsteuerung (5) mit einem Port-Multiplexer/Demultiplexer (11) ausgerüstet ist.

10. Steuersystem nach einem der Ansprüche 1 bis 9, **dadurch gekennzeichnet, dass** die Steuerzentrale (2) und/oder die zentrale Ablaufsteuerung (5) mit einer Sprachvorbearbeitungsstufe (12) ausgerüstet ist.

11. Steuersystem nach einem der Ansprüche 1 bis 10, **dadurch gekennzeichnet, dass** die Steuerzentrale (2) und/oder die zentrale Ablaufsteuerung (5) eine Spracherkennungsstufe (13) aufweist.

12. Steuersystem nach einem der Ansprüche 1 bis 11, **dadurch gekennzeichnet, dass** die Steuerzentrale (2) und/oder die zentrale Ablaufsteuerung (5) eine Sprachsynthesestufe (14) aufweist.

13. Steuersystem nach einem der Ansprüche 1 bis 12, **dadurch gekennzeichnet, dass** die Steuerzentrale (2) und/oder die zentrale Ablaufsteuerung (5) eine Authentizierungsstufe (21) aufweist.

14. Steuersystem nach einem der Ansprüche 1 bis 13, **dadurch gekennzeichnet, dass** die Steuerzentrale (2) und/oder die zentrale Ablaufsteuerung (5) mit zumindest einem KNX-Anschluss ausgerüstet ist.

15. Steuersystem nach einem der Ansprüche 1 bis 14, **dadurch gekennzeichnet, dass** die Steuerzentrale (2) und/oder die zentrale Ablaufsteuerung (5) mit zumindest einem ersten Ethernetanschluss (15) ausgerüstet ist.

16. Steuersystem nach einem der Ansprüche 1 bis 15, **dadurch gekennzeichnet, dass** zumindest ein Kommunikationsgerät (3) mit einem KNX-Anschluss ausgerüstet ist.

17. Steuersystem nach einem der Ansprüche 1 bis 16, **dadurch gekennzeichnet, dass** zumindest ein Kommunikationsgerät (3) mit zumindest einem zweiten Ethernetanschluss (16) ausgerüstet ist.

18. Steuersystem nach einem der Ansprüche 1 bis 17. **dadurch gekennzeichnet, dass** zumindest ein Kommunikationsgerät (3) mit einem Busankoppler ausgerüstet ist.

19. Steuersystem nach einem der Ansprüche 1 bis 18, **dadurch gekennzeichnet, dass** zumindest ein Kommunikationsgerät (3) mit einem Funkmodul ausgerüstet ist.

20. Steuersystem nach einem der Ansprüche 1 bis 19, **dadurch gekennzeichnet, dass** zumindest durch einen Teil der von den Kommunikationsgeräten (3) ausgehenden Informationen eine sprachgeführte Steuerung weiterer an das Bussystem (1) angeschlossener Systemteilnehmer bzw. Geräte und Anlagen vornehmbar ist.

21. Steuersystem nach einem der Ansprüche 1 bis 20 **dadurch gekennzeichnet, dass** zumindest ein Teil der Kommunikationsgeräte (3) Bestandteil einer an das Bussystem (1) angeschlossenen Alarmanlage (17) sind.

22. Steuersystem nach einem der Ansprüche 1 bis 21, **dadurch gekennzeichnet, dass** zumindest ein Teil der Kommunikationsgeräte (3) Bestandteil einer an das Bussystem (1) angeschlossenen Rundrufanlage sind.

23. Steuersystem nach einem der Ansprüche 1 bis 22 **dadurch gekennzeichnet, dass** zumindest ein Teil der Kommunikationsgeräte (3) Bestandteil eine an das Bussystem (1) angeschlossenen Diktiergeräteanlage sind.

24. Steuersystem nach einem der Ansprüche 1 bis 23 **dadurch gekennzeichnet, dass** zumindest ein Teil der Kommunikationsgeräte Bestandteil einer an das Bussystem angeschlossenen Telefonanlage sind.

25. Steuersystem nach einem der Ansprüche 1 bis 24 **dadurch gekennzeichnet, dass** zumindest ein Teil der Kommunikationsgeräte (3) Bestandteil einer an das Bussystem (1) angeschlossenen Radioanlage sind.

26. Steuersystem nach einem der Ansprüche 1 bis 25 **dadurch gekennzeichnet, dass** zumindest ein Teil der Kommunikationsgeräte (3) Bestandteil einer an das Bussystem (1) angeschlossenen Babyphonanlage sind.
